# EUROPÄISCHE PATENTSCHRIFT

(11) **EP 4 565 850 B1**
(45) Veröffentlichungstag und Bekanntmachung des Hinweises auf die Patenterteilung: **03.09.2025**
(21) Anmeldenummer: 23748460.5
(22) Anmeldetag: 21.07.2023
(51) Int. Cl.: G01G 21/22, G01G 23/01, G01G 21/26

(54) **WAAGE MIT MAGAZIN UND LASTWECHSELEINRICHTUNG**
BALANCE HAVING A MAGAZINE AND A LOAD-CHANGE DEVICE
BALANCE COMPRENANT UN MAGASIN ET UN DISPOSITIF DE CHANGEMENT DE CHARGE

(30) Priorität: 02.08.2022 DE 102022119374
(43) Veröffentlichungstag der Anmeldung: 11.06.2025
(73) Patentinhaber: Sartorius Lab Instruments GmbH & Co. KG, 37079 Göttingen (DE)
(72) Erfinder: HILBRUNNER, Falko, 98693 Ilmenau (DE); FRÖHLICH, Thomas, 98693 Ilmenau (DE); SCHREIBER, Mario, 07607 Gösen (DE); SCHULZ, Tim, 98617 Untermaßfeld (DE); FEHLING, Thomas, 37218 Witzenhausen (DE)
(74) Vertreter: Novagraaf International SA
(86) Internationale Anmeldenummer: PCT/EP2023/070287
(87) Internationale Veröffentlichungsnummer: WO 2024/028124

(56) Entgegenhaltungen:
- EP-A1- 3 255 393
- DE-A1- 102005 005 366

## Beschreibung

### Gebiet der Erfindung

Die Erfindung bezieht sich auf eine Waage, umfassend
- ein Magazin für nacheinander zu verwiegende Prüfgewichte,
- eine Wägevorrichtung mit einem Wägegutträger zur Aufnahme je eines Prüfgewichtes während eines zugeordneten Wägevorgangs und
- eine Lastwechseleinrichtung zur Überführung des jeweils aktuell zu verwiegenden Prüfgewichtes von dem Magazin auf den Wägegutträger,
wobei das Magazin einen motorisch rotierbaren Drehteller umfasst, über dessen Umfang verteilt die Prüfgewichte in gemeinsam mit dem Drehteller rotierbaren Prüfgewichtaufnahmen anordenbar sind und mittels dessen die das jeweils aktuell zu verwiegende Prüfgewicht tragende Prüfgewichtaufnahme in einer Wäge-Bereitschaftsposition über dem Wägegutträger positionierbar ist.

### Stand der Technik

Derartige Waagen, insbesondere Massenkomparatoren, sind bekannt aus der DE 10 2015 104 693 A1.

Als sogenannte Massekomparatoren sind hochgenaue Präzisionswaagen bekannt, die speziell dafür ausgelegt sind, zuweilen als Testgewichte bezeichnete Gewichtsstücke eines bestimmten Nominalgewichtes mit einem entsprechenden, zuweilen als Referenzgewicht bezeichneten Massestandard zu vergleichen. Test- und Referenzgewichte sollen hier ohne Einschränkung der Allgemeinheit unter dem Begriff der Prüfgewichte zusammengefasst werden. Solche Massekomparatoren finden insbesondere Einsatz bei der Kalibrierung bzw. Eichung von Gewichtsstücken.

Typischerweise werden dabei die Prüfgewichte in einem Magazin bevorratet und mittels einer Lastwechseleinrichtung nacheinander der eigentlichen Wägevorrichtung, insbesondere deren Wägegutträger, zugeführt. Auf diese Weise lassen sich eine Vielzahl von Prüfgewichten automatisiert nacheinander verwiegen. Der konkrete Aufbau der eigentlichen Wägevorrichtung ist im Kontext der vorliegenden Anmeldung ohne Belang.

Aus der eingangs genannten, gattungsbildenden Druckschrift ist ein Massekomparator bekannt, dessen Magazin als ein horizontal ausgerichteter Drehteller ausgebildet ist. Auf dessen Oberseite können an vorgegebenen, über den Umfang des Drehtellers verteilten Positionen die nacheinander zu verwiegenden Prüfgewichte positioniert werden. Der Drehteller ist dabei im Bereich seines Außenumfangs auf der Stirnkante eines hohlzylindrischen Gehäuses mittels mehrerer Wälzlager rotierbar gelagert. Im Inneren des Gehäuses befindet sich die eigentliche Wägevorrichtung mit einem nach oben gerichteten Wägegutträger. Insbesondere ist der Wägegutträger so positioniert, dass durch entsprechende Winkelstellung des Drehtellers jede Prüfgewichtaufnahme exakt über ihm positionierbar ist. Diese Winkellage des Drehtellers bzw. die resultierender Winkelposition der entsprechenden Prüfgewichtaufnahme wird hier als Wäge-Bereitschaftsstellung bezeichnet. Um das Prüfgewicht von seiner Prüfgewichtsaufnahme an den Wägegutträger übergeben zu können, ist bei dem bekannten Massekomparator die eigentliche Wägevorrichtung auf einem Hubtisch angeordnet, der innerhalb des Gehäuses so weit nach oben verfahren werden kann, dass nach oben gerichtete Stege des Wägegutträgers durch korrespondierende Schlitze der exakt über ihm, d.h. in ihrer Wäge-Bereitschaftsposition befindlichen Prüfgewichtsaufnahme hindurchragen und das Prüfgewicht von der Prüfgewichtsaufnahme abheben zu können, sodass dessen Gewichtskraft nun unmittelbar auf den Wägegutträger wirkt. Nach dem Wiegevorgang wird die Wägevorrichtung mittels des Hubtischs wieder abgesenkt, sodass das Prüfgewicht zurück an die Prüfgewichtsaufnahme übergeben wird. Die Absenkung der Wägevorrichtung erfolgt dabei so weit, dass die Stege des Wägegutträgers vollständig aus den Schlitzen der Prüfgewichtsaufnahme freikommen. Sodann kann der Drehteller weiter rotiert werden, bis eine andere Prüfgewichtaufnahme mit dem auf ihr angeordneten Prüfgewicht exakt über den Wägegutträger, d.h. in ihrer Wäge-Bereitschaftsposition positioniert ist. Der oben beschriebene Vorgang kann mit dem neuen Prüfgewicht wiederholt werden.

Der Fachmann wird verstehen, dass im Kontext der vorliegenden Beschreibung Begriffe wie "oben" und "unten" auf die betriebsbereite Ausrichtung der Waage beziehen, d.h. sich an der Richtung der Schwerkraft orientieren. Entsprechend sind Begriffe wie "anheben" und "absenken" als Bewegungen nach oben bzw. unten in diesem Sinne zu verstehen.

Nachteilig bei dem bekannten Massekomparator ist, dass die eigentliche Wägevorrichtung auf einem bewegbaren Element, nämlich dem Hubtisch angeordnet ist, was zu (geringfügigen) Instabilitäten führen kann. Um diesem Problem zu begegnen, sieht die genannte Druckschrift zwar vor, den Hubtisch gegen einen Vertikalanschlag zu fahren, wodurch das genannte Problem weitgehend, wenngleich nicht vollständig gelöst wird. Zudem kann die Mechanik des Hubtischs die Verwendung von Schmiermitteln erforderlich machen, wodurch das bekannte System nicht vakuumtauglich ist.

Aus der EP 3 255 393 A1 ist ein alternatives Konzept eines Massekomparators bekannt, bei dem die eigentliche Wägevorrichtung auf einer Basisplatte fixiert und der Drehteller relativ zu dieser Basis sowohl vertikal als auch rotativ verstellbar ist. Dies hat den Nachteil, dass die Welle des Drehtellers zwei unterschiedliche Bewegungskomponenten vollführen muss. Diese sind daher miteinander gekoppelt und ihre Lagerspiele wirken zusammen, sodass eine Ansteuerung mit der für Massekomparatoren erforderlichen, extrem hohen Präzision konstruktiv höchst anspruchsvoll und daher teuer ist. Auch hier ist der nachteilige Einsatz von Schmiermitteln notwendig.

Aus der DE 10 2005 005 366 A1 ist eine Vorrichtung zum Transport von Prüfgewichten von einem als ein drehbarer Trägerring ausgebildeten Magazin auf den Lastaufnehmer einer unterschaligen Waage bekannt. Der Trägerring weist eine Mehrzahl von Positionen für die Aufnahme der Prüfgewichte auf. Unter jeder dieser Positionen befinden sich schlitzförmige Durchgriffsöffnungen und jeweils neben jeder Position ein Loch im ersten Trägerring, dessen Durchmesser größer ist als derjenige der Prüfgewichte. Zur Übergabe eines Prüfgewichtes vom Trägerring auf den Lastaufnehmer, der als eine den Trägerring umgreifende Gondel ausgebildet ist, wird der der Trägerring so lange gedreht, bis das Prüfgewicht über der Auflagefläche des Lastaufnehmers zum Stehen kommt. Dann heben unter dem Lastaufnehmer befindliche Bolzen einer Hubvorrichtung das Prüfgewicht an, indem sie sowohl Durchgriffsöffnungen in der Auflagefläche des Lastaufnehmers als auch die schlitzförmigen Durchgriffsöffnungen im Trägerring durchgreifen. Der Trägerring wird sodann gedreht, bis sich das benachbarte Loch im Trägerring über der Auflagefläche des Lastaufnehmers und damit unter dem Prüfgewicht befindet. Anschließend senkt die Hubvorrichtung durch Einfahren ihrer Bolzen das Prüfgewicht auf den Lastaufnehmer ab.

### Aufgabenstellung

Es ist die Aufgabe der vorliegenden Erfindung, eine gattungsgemäße Waage, insbesondere einen gattungsgemäßen Massekomparator derart weiterzubilden, dass unter Beibehaltung der Entkopplung von Vertikal- und Rotations-Bewegungskomponenten und unter Erzielung höchster Positionierungspräzision ein auch für Vakuumanwendungen grundsätzlich geeignetes System resultiert.

### Darlegung der Erfindung

Diese Aufgabe wird in Verbindung mit den Merkmalen des Oberbegriffs von Anspruch 1 dadurch gelöst, dass jede Prüfgewichtaufnahme als eine relativ zu dem Drehteller vertikalbeweglich an diesem gelagerte Trägergondel ausgebildet ist, die mittels einer ersten motorischen Höhenverstelleinheit relativ zu dem Drehteller höhenverstellbar ist.

Die Grundidee der vorliegenden Erfindung besteht darin, zur Höhenverstellung der Prüfgewichte, die im Rahmen ihrer Übergabe an den Wägegutträger erforderlich ist, anstelle des gesamten Magazins oder der eigentlichen Wägevorrichtung jede einzelne Prüfgewichtaufnahme motorisch vertikalverstellbar zu gestalten. Mit anderen Worten wird also eine individuelle vertikale Bewegbarkeit jeder einzelnen Prüfgewichtaufnahme relativ zum Drehteller und zum Wägegutträger realisiert. Dadurch muss der Drehteller als solcher keine Vertikalbewegungen vollführen, sodass seine Lagerung und sein Antrieb allein auf seine rotatorische Bewegungskomponente hin konzipiert sein können. Jede vertikale Bewegungskomponente kann für den Drehteller als solchen vollständig unterbunden werden. Zugleich bedarf es auch keines Anhebens und Absenkens der eigentlichen Wägevorrichtung. Diese kann folglich beliebig stabil auf einer Basis fixiert werden. Durch den Verzicht auf jede grobe Bewegungsmechanik bedarf es auch keines Einsatzes von Schmiermitteln, sodass die resultierende Waage grundsätzlich vakuumfähig ist.

Bevorzugt ist jede Trägergondel nach oben gegen einen zugeordneten, drehtellerfesten Anschlag federvorgespannt und mittels einer von der ersten motorischen Höhenverstelleinheit aufgebrachten Kraft entgegen der Federvorspannkraft motorisch nach unten absenkbar. Die Federkraft der Vorspannfeder sollte dabei die Gewichtskraft der Trägergondel und des im Betriebsfall auf ihr positionierten Prüfgewichts übersteigen. Hierdurch wird nämlich die höchste einnehmbare Position der Trägergondel mittels besagten Anschlages präzise definiert. Diese Stellung der Trägergondel kann als Ruhestellung bezeichnet werden. Jede Trägergondel befindet sich zunächst in ihrer Ruhestellung. Dies gilt insbesondere auch für die durch Rotation des Drehtellers in ihre Wäge-Bereitschaftsposition über dem Wägegutträger positionierte Trägergondel mit dem aktuell zu verwiegenden Prüfgewicht. Aus dieser Ruheposition bedarf es nun einer Absenkung der Trägergondel nach unten, um das Prüfgewicht auf den Wägegutträger zu übergeben. Diese Absenkung erfolgt motorisch mittels der ersten motorischen Höhenverstelleinrichtung. Die Wechselwirkung zwischen Prüfgewichtaufnahme, Prüfgewicht und Wägegutträger im Rahmen der eigentlichen Lastübergabe kann den bekannten Prinzipien folgen. So ist bevorzugt vorgesehen, dass der Boden der Trägergondel mit Schlitzen versehen ist, durch welche im abgesenkten Zustand der in ihrer Wäge-Bereitschaftsposition befindlichen Trägergondel korrespondierende Stege des Wägegutträgers hindurchragen. Beim Absenken der Trägergondel fahren also die Stege des Wägegutträgers unter den Boden des Prüfgewichts und heben dieses von seiner Prüfgewichtaufnahme, d.h. vom Boden der Trägergondel ab. Nach dem Wägevorgang wird die Kraftwirkung der ersten motorischen Höhenverstelleinrichtung abgestellt oder zumindest so weit reduziert, dass die Trägergondel durch die Federkraft der Vorspannfeder wieder angehoben und in ihre Ruhestellung rücküberführt wird.

Der konkrete Mechanismus zur Vertikalbewegung der Trägergondeln kann auf unterschiedliche Weisen realisiert werden. Als besonders vorteilhaft wird eine Ausführungsform angesehen, bei der die Trägergondel mittels einer Parallellenkeranordnung, deren festes Ende an dem Drehteller und deren bewegliches Ende an der Trägergondel fixiert ist, an dem Drehteller angelenkt ist. Dem Fachmann auf dem einschlägigen Gebiet der Wägetechnik sind Parallellenkeranordnungen, die auch innerhalb von sogenannten Wägesystemen, insbesondere als Roberval-Mechnismus Einsatz finden, im Detail bekannt. Sie bestehen im Wesentlichen aus einem horizontalen Oberlenker, einem parallel dazu verlaufenden Unterlenker und je einem starren Koppelbalken, der die Enden der beiden Lenker paarweise miteinander verbindet. Im Gegensatz zu einem einfachen Biegebalken bleibt bei Auslenkung der Parallellenkeranordnung die räumliche Ausrichtung des Koppelbalkens am beweglichen Ende exakt erhalten, während er eine (leicht gekrümmte) Vertikalbewegung durchführt. Ober- und Unterlenker können starr ausgebildet und an den Koppelbalken angelenkt sein. In diesem Fall ist es möglich, die Parallellenkeranordnung als monolithische Einheit auszubilden und dabei die Gelenke als Materialdünnstellen auszuarbeiten. Alternativ ist es möglich, Ober- und Unterlenker als starr an den Koppelbalken fixierte Blattfedern auszubilden. In jedem Fall ergeben sich keine reibungsbehafteten Gleitkontaktflächen, wie dies beispielsweise bei einer Lagerung der Trägergondel an vertikalen Führungsstäben oder Zahnstangen der Fall wäre.

Die Parallellenkeranordnung ist bevorzugt so justiert, dass in der Ruhestellung, d.h. insbesondere bei Anlage am oben erläuterten Anschlag, Ober- und Unterlenker leicht nach oben aus ihrer exakten Horizontallage ausgelenkt sind. Diese exakte Horizontallage sollte bevorzugt in demjenigen Absenkungsstadium erreicht werden, in dem die eigentliche Übergabe des Prüfgewichtes von der Trägergondel auf den Wägegutträger erfolgt. In diesem Stadium nämlich ist der durch die Kreisbahnbewegung des beweglichen Koppelbalkens eingebrachte Fehler am geringsten: hier geht die horizontale Bewegungskomponente gegen null.

Die bauraumgünstigste Variante zur Umsetzung dieser Ausführungsform der Erfindung ist die hängende Anlenkung der Trägergondeln unterhalb des Drehtellers. Bei dieser Anordnung ist das feste Ende jeder Parallellenkeranordnung an der Unterseite des Drehtellers fixiert. Mit entsprechendem Mehraufwand an Bauraum und Mechanik können freilich auch andere Gestaltungen realisiert werden. Der Einfachheit halber soll die nachfolgende Beschreibung jedoch auf die genannte Ausgestaltung mit hängenden Trägergondeln fokussiert werden, wobei der Fachmann die entsprechenden Ausführungen ohne weiteres auch auf andere Varianten wird übertragen können.

Grundsätzlich denkbar ist, jede Trägergondel mit einem eigenen motorischen Antrieb auszustatten. Dieser hätte zwischen der Trägergondel bzw. dem freien Ende der Parallellenkeranordnung und dem Drehteller zu sitzen und wäre mechanisch mit beiden Elementen verbunden. Dies kann jedoch thermisch ungünstige Auswirkungen haben. An jedem motorischen Antrieb fällt bei dessen Betrieb Wärme an. Für hochpräzise gravimetrische Messungen ist aber die Temperaturkonstanz des Systems von Bedeutung. Der Wärmeeintrag müsste bei einer solchen Ausführungsform also in irgendeiner Weise thermodynamisch oder mathematisch kompensiert werden. Eine günstigere und hier bevorzugte Ausführungsform sieht hingegen vor, dass die erste motorische Höhenverstelleinheit mit dem Drehteller mechanisch unverbunden ist. Der Drehsteller kann sich dadurch relativ zur ersten motorischen Höhenverstelleinheit drehen und ihr jede Prüfgewichtaufnahme einzeln zuführen. Die erste motorische Höhenverstelleinheit kann dann so ausgelegt sein, dass sie nur auf die jeweils in der Wäge-Bereitschaftsposition befindliche Trägergondel einzuwirken vermag.

Insbesondere kann vorgesehen sein, dass die erste motorische Höhenverstelleinheit einen exzentrischen Nocken aufweist, der auf einer motorisch rotierbaren Nockenwelle fixiert ist, wobei der Nocken derart angeordnet ist, dass sich ein mit der jeweils in der Wäge-Bereitschaftsposition befindlichen Trägergondel vertikalkraftübertragend verbundener Stößel im Bewegungsbereich des Nockens befindet, sodass der Stößel durch Rotation der Nockenwelle mittels des Nockens mechanisch niederdrückbar ist. Der die Nockenwelle antreibende Motor kann außerhalb eines thermisch isolierten und ggf. evakuierten Zentralbereichs des Gesamtsystems angeordnet sein. Dadurch wird durch seinen Betrieb keine Wärme im Bereich der Prüfgewichte bzw. der eigentlichen Wägevorrichtung erzeugt. Vielmehr befindet sich in diesem kritischen Zentralbereich lediglich ein mechanisches Wechselwirkungspaar aus Nocken und Stößel, wobei der Stößel an der Trägergondel selbst oder an der Parallellenkeranordnung fixiert ist.

Speziell bei der oben als bevorzugt erläuterten Variante mit hängenden Trägergondeln kann vorgesehen sein, dass die Nockenwelle oberhalb des Drehtellers, parallel zu diesem und windschief zu seiner Drehachse verläuft, die Trägergondeln hängend unterhalb des Drehtellers gelagert sind und ihr jeweiliger Stößel in einen jeweils zugeordneten Durchbruch des Drehtellers hineinragt oder diesen durchragt. Die mechanische Wechselwirkung zwischen der ersten motorischen Höhenverstelleinheit und der (in ihrer Wäge-Bereitschaftsposition befindlichen) Trägergondel, insbesondere zwischen Nocken und Stößel, erfolgt bei dieser Ausführungsform durch den Drehteller hindurch. Insbesondere kann die erste motorische Höhenverstelleinheit in dem weitgehend freien Bereich oberhalb des Drehtellers angeordnet sein, wo anders als unterhalb des Drehtellers, wo die Trägergondeln angeordnet sind, ausreichend Bauraum zur Verfügung steht.

Der Drehteller ist bevorzugt auf einer Mehrzahl von über seinen Umfang verteilten und nach oben auf seine Unterseite einwirkenden Wälzlagern axialgelagert. Insbesondere wird es als günstig angesehen, wenn der Drehteller mittels genau dreier Wälzlager axialgelagert ist. Die Wälzlager werden dabei mit der Gewichtskraft des gesamten Magazins belastet, was zu einer vertikal bzw. axial sehr stabilen Lagerung führt. Die bevorzugte Wahl von genau drei Wälzlagern zur Axiallagerung des Drehtellers ergibt sich aus der damit verbundenen, exakten Bestimmung der Drehtellerebene.

In Bezug auf die Radiallagerung des Drehtellers ist bevorzugt vorgesehen, dass dieser mittels einer Mehrzahl von über seinen Umfang verteilten, nach radial innen auf seine Umfangsfläche einwirkenden Wälzlagern radialgelagert ist. Dabei ist bevorzugt vorgesehen, dass der Drehteller mittels genau dreier Wälzlager, von denen zwei als Festund eines als federvorgespanntes Loslager ausgebildet sind, radialgelagert ist. Dadurch ist selbst bei (geringem) Verschleiß stets eine exakte Lagerung und daher eine stets reproduzierbare Rotationsbewegung des Drehtellers gewährleistet.

Zum Antrieb des Drehtellers ist bevorzugt vorgesehen, dass dieser mittels eines auf seiner Oberfläche abrollenden, motorisch antreibbaren Reibrades antreibbar ist. Ein Vorteil des Reibradantriebes liegt in der durch den Schlupf des Reibrades auf der Drehteller-Oberfläche begrenzten Maximalmomentes, was eine höhere Unfallsicherheit im Gegensatz zu verzahnten Antrieben, wie beispielsweise einem Zahnriemen- oder Zahnradantrieb, gewährleistet. Allerdings sind auch solche Antriebe ebenso wie beispielsweise ein Reibriemenantrieb im Rahmen der Erfindung grundsätzlich verwendbar. Zumindest aufgrund des Schlupfes wird es vorteilhaft angesehen, den Drehteller mit einem Drehlageindikator auszustatten. Dies gestattet eine hohe Reproduzierbarkeit der Überführung jeder Prüfgewichtaufnahme in die Wäge-Bereitschaftsposition. Bei schlupffreien Antriebsvarianten kann diese Reproduzierbarkeit ggf. allein durch exakte Motoransteuerung gewährleistet werden.

Bei der bevorzugten Ausführungsform des Reibradantriebes rollt das Reibrad auf der Oberseite des Drehtellers ab und ist auf einer oberhalb des Drehtellers und senkrecht zu dessen Drehachse angeordneten, motorisch rotierbaren Antriebswelle fixiert. Anderes als bei einem Abrollen des Reibrades auf der Umfangsfläche oder der Unterseite des Drehtellers kann der vom Reibrad ausgeübte Druck auf den Drehteller bei dieser bevorzugten Gestaltung keine Störung der eben dort ansetzenden Lagerung des Drehtellers verursachen. Allerdings bietet ein Abrollen des Reibrades an der Umfangsfläche ein Einsparpotential dahingehend, dass eines der Radiallager des Drehtellers, insbesondere das Loslager, als Rollenlager ausgebildet und eine entsprechende Doppelfunktion ausführen kann. Der die Antriebswelle antreibende Motor selbst kann außerhalb des Zentralbereichs des Gesamtsystems, insbesondere außerhalb eines thermisch isolierten Kerns angeordnet sein. Wie oben bereits im Kontext der Nockenwelle erläutert, wird dadurch der unerwünschte Eintrag von Wärme in dessen Zentralbereich des Systems vermieden.

Die Funktion der Trägergondeln wurde oben lediglich im Kontext der Übergabe der Prüfgewichte an den Wägegutträger erläutert. Dasselbe Prinzip kann allerdings auch zum Bestücken der Trägergondeln mit Prüfgewichten aus einem externen Prüfgewichtslager bzw. beim Leeren des Magazins in besagtes externes Prüfgewichtslager genutzt werden. Dabei ist zunächst vorgesehen, dass in Bezug auf die Drehachse des Drehtellers winkelversetzt zu dem Wägegutträger eine Bestückungseinheit angeordnet ist, mittels welcher das Magazin mit Gewichtsstücken aus einem Gewichtsstücklager als Prüfgewichte bestückbar ist. Günstigerweise wird dazu der Trägergondel-Absenkungsmechnismus doppelt ausgelegt. Mit anderen Worten ist bevorzugt vorgesehen, dass zusätzlich zu der ersten motorischen Höhenverstelleinheit eine gleichartige, zweite motorische Höhenverstelleinheit vorgesehen ist, die nur auf diejenige der Trägergondeln einzuwirken vermag, die sich aktuell in einer Bestückungs-Bereitschaftsstellung über einem radial zum Drehteller bewegbaren Zuführelement des Bestückungseinheit befindet. An der Bestückungseinheit wechselwirkt die Vertikalverstellung der Trägergondel sodann mit einem radial (in Bezug auf den Drehteller) bewegbaren Prüfgewichts- Transporteur. Zum Beladen wird zunächst eine leere Trägergondel in besagte Bestückungs-Bereitschaftsposition gedreht. sodann wird sie abgesenkt abgesenkt. Das mit einem Prüfgewicht bestückte Zuführelement fährt vom Prüfgewichtslager nach radial innen und positioniert das Prüfgewicht über dem Boden der Trägergondel. Diese wird daraufhin wieder angehoben und übernimmt das Prüfgewicht, wobei die Schlitze im Boden der Trägergondel auch hier mit Stegen des Zuführelements kollisionsfrei wechselwirken. Im Anschluss wird das Zuführelement wieder nach radial außen verfahren und die nächste Trägergondel wird durch Rotation des Drehtellers in die Bestückungs-Bereitschaftsposition verfahren. Zum Entladen der Trägergondeln erfolgt die Wechselwirkung mit dem Zuführelement umgekehrt, insbesondere (mit Ausnahme der radialen Verschiebung) analog der Übergabe von Prüfgewichten an den Wägegutträger, wie oben beschrieben. Selbstverständlich ist es auch möglich eine Ent- und eine Beladung einer Trägergondel in einem einzigen Vorgang, in dem das Prüfgewicht in besagter Trägergondel ausgetauscht wird, zu kombinieren.

Weitere Einzelheiten und Vorteile der Erfindung ergeben sich aus der nachfolgenden speziellen Beschreibung und den Zeichnungen.

### Kurzbeschreibung der Zeichnungen

Es zeigen:
- Figur 1:: eine perspektivische Darstellung einer Ausführungsform des Lastwechslers einer erfindungsgemäßen Waage,
- Figur 2:: eine schematische Skizze des erfindungsgemäßen Lastwechselprinzips,
- Figur 3:: eine schematische Skizze einer bevorzugten Ausführungsform der erfindungsgemäßen Höhenverstelleinheit,
- Figur 4:: eine schematisierte Draufsicht auf eine Ausführungsform des Drehtellers einer erfindungsgemäßen Waage,
- Figur 5:: eine schematisierte Schnittdarstellung einer Ausführungsform des Drehtellers einer erfindungsgemäßen Waage,
- Figur 6:: eine perspektivische Darstellung einer Ausführungsform des Wägegutträgers einer erfindungsgemäßen Waage,
- Figur 7:: eine perspektivische Darstellung einer Ausführungsform des Tragbodens einer Trägergondel einer erfindungsgemäßen Waage sowie
- Figur 8:: eine schematische Skizze des Bestückungsvorgangs einer Trägergondel einer Ausführungsform einer erfindungsgemäßen Waage.

### Beschreibung bevorzugter Ausführungsformen

Gleiche Bezugszeichen in den Figuren deuten auf gleiche oder analoge Elemente hin.

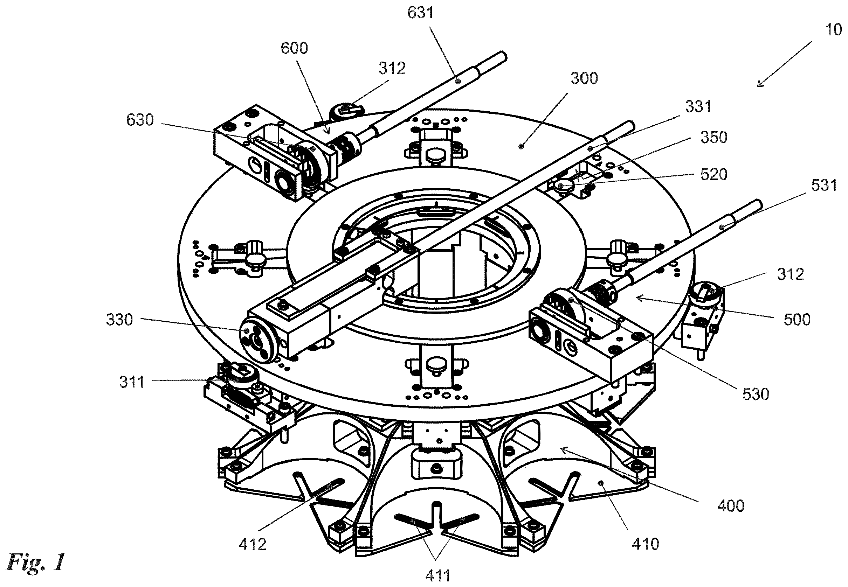

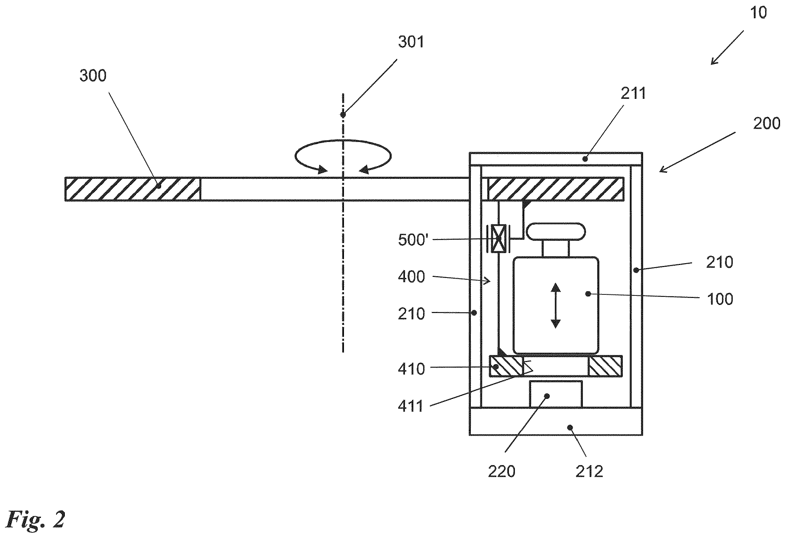

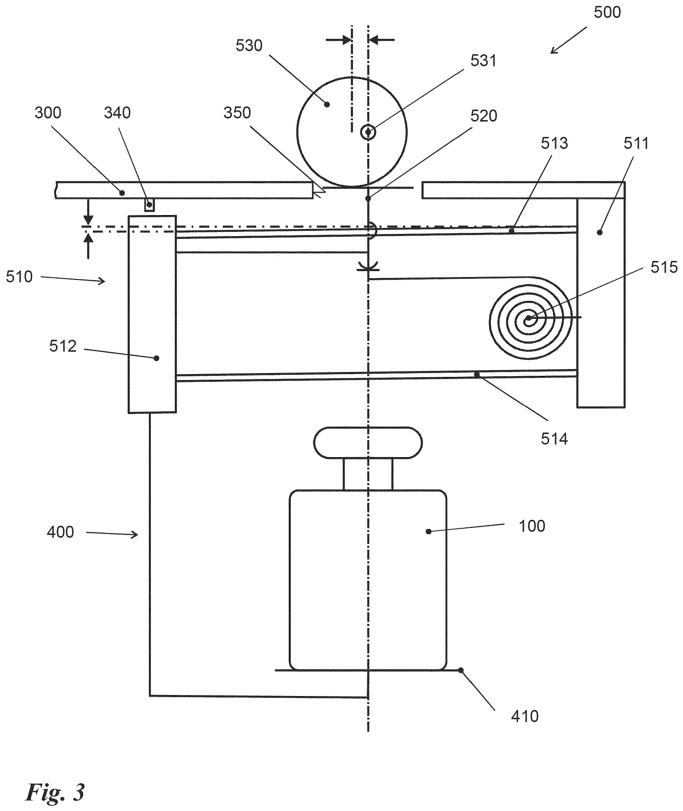

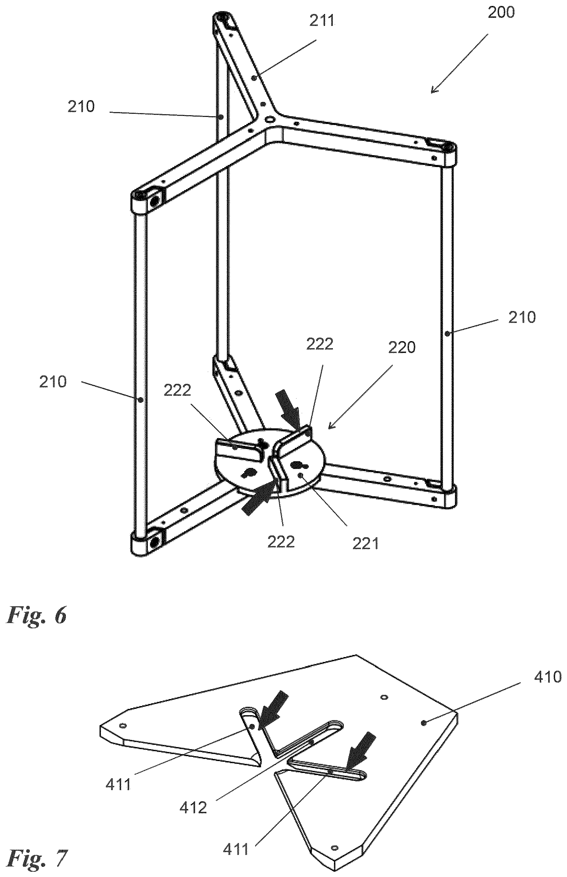

Figur 1 zeigt in einer perspektivischen Darstellung eine bevorzugte Ausführungsform des Lastwechslers 10 einer erfindungsgemäßen Waage. Der dargestellte Lastwechsler 10 vereint die Funktion eines Magazins für in Figur 1 nicht, wohl aber in den Figuren 2 und 3 dargestellte Prüfgewichte 100 sowie die Funktion der eigentlichen Lastwechseleinrichtung zur Überführung des jeweils aktuell zu verwiegenden Prüfgewichtes 100 von dem Magazin auf einen in Figur 1 nicht, wohl aber in Figur 6 dargestellten Wägegutträger 200 einer im Übrigen nicht dargestellten, eigentlichen Wägevorrichtung, insbesondere eines Massekomparators. Der Lastwechsler 10 soll nachfolgend unter vorwiegender Bezugnahme auf Figur 1 beschrieben werden, wobei zur Beschreibung einzelner seiner Elemente auf die übrigen Figuren verwiesen werden wird.

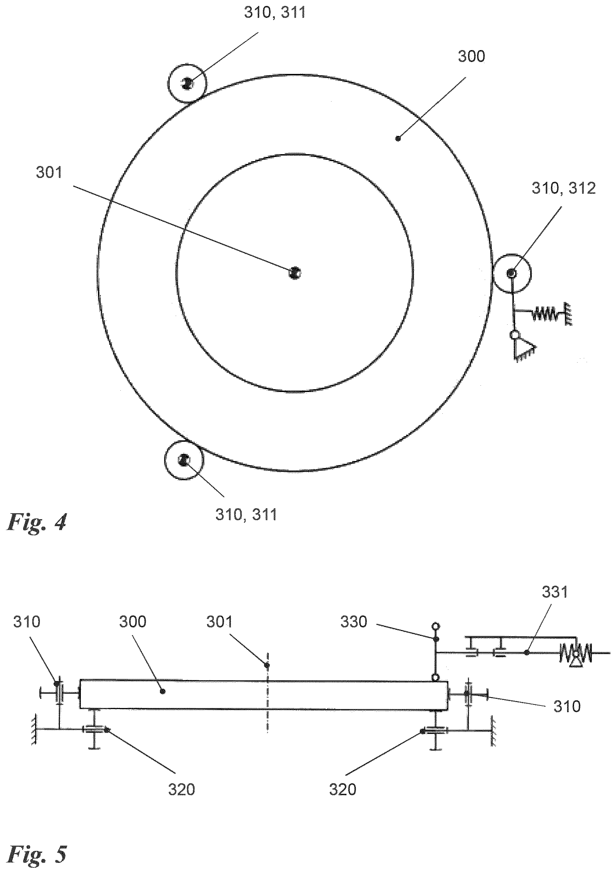

Ein wesentliches konstruktives Element der funktionalen Einheit "Magazin" ist der Drehteller 300. Der Drehteller 300 ist um eine zentrale, vertikal ausgerichtete Drehachse 301 (siehe Figur 2) in einer horizontalen Drehtellerebene rotierbar gelagert. Seine Radiallagerung erfolgt bevorzugt, wie insbesondere aus den Figuren 4 und 5 ersichtlich, mittels an seiner Umfangsfläche angreifender, radialer Wälzlager 310. Die besonders bevorzugte Ausführungsform dieser Lagerung ist in Figur 4 dargestellt. Hier finden exakt drei radiale Wälzlager 310 Einsatz, von denen zwei als Festlager 311 und eines als federvorgespanntes Loslager 312 ausgebildet sind. Die axiale Lagerung des Drehtellers 300 erfolgt, wie insbesondere aus der stark schematisierten Darstellung von Figur 5 ersichtlich, mittels an seiner Unterseite angreifender, axialer Wälzlager 320. In nicht dargestellter Weise sind die axialen Wälzlager 320, analog der in Figur 4 ersichtlichen Verteilung der radialen Wälzlager 310, gleichmäßig über den Umfang des Drehtellers 300 verteilt, wobei bevorzugt exakt drei axiale Wälzlager 320 Einsatz finden.

Der rotative Antrieb des Drehtellers 300 erfolgt, wie in Figur 5 dargestellt, bevorzugt mittels eines auf der Oberseite des Drehtellers 300 abrollenden Reibrades 330, welches mittels einer Antriebswelle 331 von einem nicht dargestellten Motor anteibbar ist. Die Antriebswelle 331 verläuft, wie in Figur 1 gezeigt, bevorzugt oberhalb des Drehtellers 300 und senkrecht zu dessen Drehachse 301. Die Antriebswelle 331 kann nahezu beliebig lang gestaltet werden, sodass der zugeordnete Motor weit außerhalb des Lastwechslers 10 positioniert sein kann, um jeglichen motorbedingten Wärmeeintrag in dieses "Herzstück" der erfindungsgemäßen Waage zu vermeiden.

Die oben beschriebene Ausgestaltung von Lagerung und Antrieb des Drehtellers 300 erlaubt dessen ringscheibenförmige Gestaltung. Diese wiederum gestattet eine in Figur 2 dargestellte, außermittige Anordnung des Wägegutträgers 200, der hierzu bevorzugt die in Figur 6 gezeigte Gestaltung als ein Käfig annehmen kann. Der Käfig des Wägegutträgers 200 umfasst in der gezeigten Ausführungsform mehrere, insbesondere drei Vertikalstäbe 210, die durch einen oberen Stern 211 und einen unteren Stern 212 miteinander zu besagtem Käfig verbunden sind. Im Fall einer unterschaligen Ausgestaltung der eigentlichen Wägevorrichtung kann der Wägegutträger 200 im Zentrum seines oberen Sterns 211 an dem Lastaufnehmer des Wägesystems angelenkt werden. Im Fall einer oberschaligen Ausgestaltung der eigentlichen Wägevorrichtung erfolgt die Kopplung des Wägegutträgers 200 mit dem Lastaufnehmer des Wägesystems im Zentralbereich des unteren Sterns 212. Im Zentralbereich des unteren Sterns 212 ist in jedem Fall ein Prüfgewichtsadapter 220 angeordnet, auf welchem das aktuell zu verwiegende Prüfgewicht 100 für den Wägevorgangs zu positionieren ist. Bei der dargestellten Ausführungsform besteht der Prüfgewichtsadapter 220 im Wesentlichen aus einer Adapterplatte 221, von welcher drei radial ausgerichtete und um 120° zueinander winkelversetzte Stege 222 aufragen. Auf die Funktion der Stege 222 soll weiter unten noch näher eingegangen werden.

An der Unterseite des Drehtellers 300 sind, über seinen Umfang verteilt, mehrere individuell höhenverstellbare Trägergondeln 400 angeordnet. Diese weisen einen in seiner Form zu dem Prüfgewichtadapter 220 korrespondierenden Tragboden 410 auf, von dem sich in Figur 7 eine perspektivische Darstellung einer bevorzugten Ausführungsform findet. Auf diese Tragböden 410 wird im Betriebsfall, wie insbesondere in Figur 2 und 3 erkennbar, je ein Prüfgewicht 100 gestellt. Wie insbesondere aus Figur 7 ersichtlich, ist der Tragboden 410 mit ihn durchsetzenden Schlitzen 411 versehen, die in Form und Orientierung an die Stege 222 des Prüfgewichtsadapters 220 des Wägegutträgers 200 angepasst sind. Auf Details hierzu soll weiter unten noch näher eingegangen werden.

Zunächst soll anhand von Figur 2 das grundsätzliche Prinzip eines Lastwechslers 10 mit individuell höhenverstellbaren Trägergondeln 400 beschrieben werden. Durch geeignete Rotation des Drehtellers 300 kann eine ausgewählte Trägergondel 400 mit dem auf ihrem Tragboden 410 positionierten Prüfgewicht 100 in ihre Wäge-Bereitschaftsstellung gefahren werden, in der sie über dem Prüfgewichtsadapter 220 des Wägegutträgers 200 positioniert ist. Der Fachmann wird verstehen, dass, wenn im Kontext der vorliegenden Beschreibung vereinfachend davon gesprochen wird, dass das Prüfgewicht bzw. die Trägergondel "über dem Wägegutträger" angeordnet ist, sich diese Relativpositionierungs-Angabe lediglich auf den zur unmittelbaren Aufnahme des Prüfgewichts gedachten Bereich des Wägegutträgers, d.h. bei der dargestellten Ausführungsform dessen Wägegutadapter 220, bezieht. Der Umstand, dass andere Bereiche des Wägegutträgers 200, insbesondere der obere Stern 211 bei der dargestellten Ausführungsform, ihrerseits höher angeordnet sein können als das Prüfgewicht bzw. die Trägergondel, soll dem nicht widersprechen. Bei der dargestellten Ausführungsform also befindet sich der Tragboden 410 der Trägergondel 400 mit dem aktuell zu verwiegenden Prüfgewicht 100 in ihrer Wäge-Bereitschaftsposition innerhalb des Käfigs des Wägegutträgers 200 oberhalb dessen Prüfgewichtsadapters 220. Diese Situation ist in Figur 2 illustriert. In dieser Wäge-Bereitschaftsposition kann die Trägergondel 410 mittels einer Höhenverstelleinheit 500, 500' relativ zu dem Drehteller 300 (einschließlich aller übrigen Trägergondeln 400) sowie relativ zum Wägegutträger 200 abgesenkt werden. Beim Absenken werden die Schlitze 411 des Tragbodens 410 vom Prüfgewichtsadapter 220, insbesondere von dessen Stegen 222 durchsetzt. Bei hinreichend tiefem Absenken der Trägergondel 400 wird dadurch das Prüfgewicht 100 vom Tragboden 410 auf den Prüfgewichtadapter 220 übergeben, sodass die Gewichtskraft des Prüfgewichts 100 nun allein auf dem Wägegutträger 200 lastet, sodass ein Wägevorgang mittels der eigentlichen Wägevorrichtung durchgeführt werden kann. Die Höhenverstelleinheit 500' in Figur 2 ist rein schematisch als kleine Motoreinheit dargestellt, von der jede Trägergondel 400 eine eigene aufweist. Dies entspricht allerdings nicht der bevorzugten Ausführungsform der Erfindung. Diese ist perspektivisch in Figur 1 und stark schematisiert in Figur 3 dargestellt.

Wie aus Figur 3 ersichtlich, ist bei der bevorzugten Ausführungsform der Höhenverstelleinheit 500 die Trägergondel 400 mittels einer Parallellenkeranordnung 510 an der Unterseite des Drehtellers 300 angelenkt. Die Parallellenkeranordnung 510 umfasst einen ersten, am Drehteller 300 fixierten Koppelbalken 511 und einen zweiten, an der Trägergondel 400 fixierten Koppelbalken 512, die mittels eines Oberlenkers 513 und eines parallel zu diesem verlaufenden Unterlenkers 514 miteinander verbunden sind. Die Lenker 513, 514 sind gelenkig mit den Koppelbalken 511, 512 verbunden, wobei vorzugsweise als monolithische Materialdünnstellen ausgebildete Gelenke Einsatz finden. Alternativ könnten die Lenker 513, 514 als starr mit den Koppelbalken 511, 512 verbundene Blattfedern ausgebildet sein. Mittels einer hier als Spiralfeder dargestellten Vorspannfeder 515 ist die Parallellenkeranordnung 510, insbesondere deren zweiter Koppelbalken 512 mit der Trägergondel 400 nach oben federvorgespannt, wobei ein Anschlag 340 am Drehteller für eine exakte Definition der maximal angehobenen Stellung der Parallellenkeranordnung 510 bzw. der Trägergondel 400 sorgt. Ein starr mit dem zweiten Koppelbalken 512 verbundener Stößel 520 ragt in einen Durchbruch 350 des Drehtellers 300 hinein oder durchgreift diesen vollständig. In jedem Fall bietet der Stößel 520 eine Angriffsfläche für eine vertikal auf ihn einwirkende Kraft, mittels welcher die Parallellenkeranordnung 500 entgegen der Federkraft der Vorspannfeder 515 ausgelenkt werden und die Trägergondel 400 dadurch abgesenkt werden kann. Bei der dargestellten Ausführungsform wird besagte Vertikalkraft durch einen Nocken 530 ausgeübt, der auf einer Nockenwelle 531 fixiert ist. Bei der dargestellten Ausführungsform ist der Nocken 530 als exzentrisch auf der Nockenwelle 531 fixiertes Rad ausgebildet. Denkbar sind freilich auch nicht-rotationssymmetrische Nockenformen. Wie insbesondere aus Figur 1 ersichtlich, verläuft die Nockenwelle 531 bevorzugt parallel zur Drehtellerebene und windschief zu dessen Drehachse 301. Insbesondere verläuft sie parallel zur Antriebswelle 331 des Drehtellerantriebs. Wie oben im Kontext der Antriebswelle beschrieben, ist es auch im Zusammenhang mit der Nockenwelle 531 möglich, den diese antreibenden Motor weit nach radial außen zu verlegen, um entsprechenden Wärmeeintrag in das "Herzstück" der erfindungsgemäßen Waage zu vermeiden.

Bei der dargestellten Ausführungsform ist der ersten Höhenverstelleinheit 500 gegenüberliegend (in Bezug auf die Drehachse des Drehtellers 300) eine zweite Höhenverstelleinheit 600 angeordnet. Diese arbeitet vollkommen gleichartig zur ersten Höhenverstelleinheit 500, sodass sich eine erneute Beschreibung hier erübrigt. In Figur 1 sind deren Nocken 630 und ihre Nockenwelle 631 erkennbar. Hintergrund der doppelten Ausführung ist, dass die in Figur 1 dargestellte Ausführungsform nicht nur eine automatisierte Absenkung der Trägergondeln 400 zur Übergabe der Prüfgewichte 100 an den Wägegutträger 500 erlaubt, sondern auch eine automatische Bestückung der Trägergondeln 400 mit Prüfgewichten 100 aus einem nicht dargestellten Prüfgewichtslager.

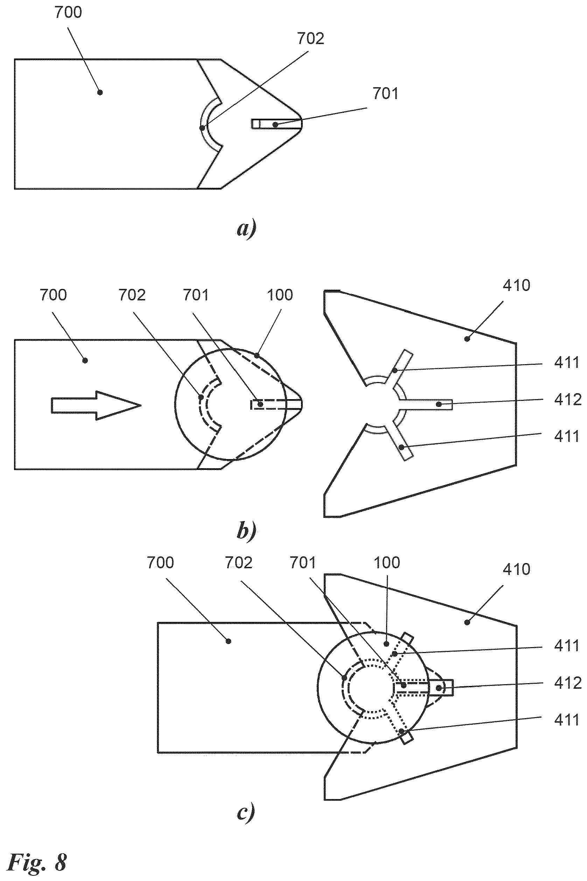

Ein solcher Bestückungsvorgang ist in Figur 8 illustriert. Verbunden mit dem Prüfgewichtslager ist ein hier als Zuführzunge ausgebildetes, linear und insbesondere radial zum Drehteller bewegbares Zuführelement 700 angeordnet. Die Spitze des Zuführelementes 700 ist mit einem radialen Steg 701 und einem teilkreisförmigen Steg 702 versehen, die aus der Ebene der Zunge nach oben aufragen und als eigentliche Auflage für die Prüfgewichte 100 dienen. Zur Bestückung einer Trägergondel 400 wird ein Prüfgewicht 100, wie in Figur 8b illustriert, auf besagten Stegen 701, 702 aufgesetzt. Sodann kann eine in ihrer Bestückungs-Bereitschaftsposition, d.h. mit ihrem Stößel exakt unter dem Nocken 630 befindliche Trägergondel 400, von der in den Figuren 8b und 8c nur der Tragboden 410 gezeigt ist, bestückt werden. Wie bereits oben im Kontext der Figuren 6 und 7 beschrieben, weist der Tragboden 410 der Trägergondel 400 Schlitze 411 auf, die beim Absenken der Trägergondel in ihrer Wäge-Bereitschaftsposition von korrespondierenden Stegen 222 des Prüfgewichtsadapters 220 des Wägegutträgers 200 durchgriffen werden. Diese Schlitze 411 bzw. Stege 222 sind in den Figuren 6 und 7 durch schwarze Pfeile gekennzeichnet. Allerdings weist der Tragboden 410 noch einen zusätzlichen Schlitz 412 auf, der im Rahmen der Prüfgewichtsübergabe an den Wägegutträger 200 keine Rolle spielt. Er wird allerdings zur Prüfgewichtsübergabe im Rahmen der in Figur 8 illustrierten Bestückung benötigt. Das mit dem Prüfgewicht 100 beladene Zuführelement 700 ist bei abgesenkter Trägergondel 400 relativ zu deren Tragboden 410 derart höhenpositioniert, dass die Zungenebene des Zuführelementes, aus welcher dessen Stege 701, 702 herausragen, tiefer liegt als die Unterseite des Tragbodens 410 der Trägergondel 400, wobei allerdings die Oberkanten der Stege 701, 702 höher liegen als die Oberseite des Tragbodens 410. In dieser Relativstellung wird das Zuführelement, wie durch den weißen Pfeil in Figur 8b angedeutet, linear auf die Trägergondel 400 zu verschoben, wobei sein linearer Steg 701 in den zusätzlichen Schlitz 412 des Tragbodens 410 fährt, sodass sich die in Figur 8c dargestellte Konstellation ergibt. Aus dieser Position kann die Trägergondel 400 wieder angehoben werden und übernimmt dabei das Prüfgewicht 100 vom Zuführelement 700.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben.

**Bezugszeichenliste**

| | | | |
|---|---|---|---|
| 10 | Lastwechsler | 515 | Vorspannfeder |
| 100 | Prüfgewicht | 520 | Stößel |
| 200 | Wägegutträger | 530 | Nocken |
| 210 | Vertikalstab | 531 | Nockenwelle |
| 211 | oberer Stern | 600 | Höhenverstelleinheit |
| 212 | unterer Stern | 630 | Nocken |
| 220 | Prüfgewichtsadapter | 631 | Nockenwelle |
| 221 | Adapterplatte | 700 | Zuführelement |
| 222 | Steg | 701 | Steg |
| 300 | Drehteller | 702 | Steg |
| 301 | Drehachse | | |
| 310 | radiales Wälzlager | | |
| 311 | Festlager | | |
| 312 | Loslager | | |
| 320 | axiales Wälzlager | | |
| 330 | Reibrad | | |
| 331 | Antriebswelle | | |
| 340 | Anschlag | | |
| 350 | Durchbruch | | |
| 400 | Trägergondel | | |
| 410 | Tragboden | | |
| 411 | Schlitz | | |
| 412 | Schlitz | | |
| 500 | Höhenverstelleinheit | | |
| 500' | Höhenverstelleinheit | | |
| 510 | Parallellenkeranordnung | | |
| 511 | Koppelbalken | | |
| 512 | Koppelbalken | | |
| 513 | Oberlenker | | |
| 514 | Unterlenker | | |

## Patentansprüche

1. Waage, umfassend
- ein Magazin für nacheinander zu verwiegende Prüfgewichte (100),
- eine Wägevorrichtung mit einem Wägegutträger (200) zur Aufnahme je eines Prüfgewichtes (100) während eines zugeordneten Wägevorgangs und
- eine Lastwechseleinrichtung zur Überführung des jeweils aktuell zu verwiegenden Prüfgewichtes (100) von dem Magazin auf den Wägegutträger (200),
wobei das Magazin einen motorisch rotierbaren Drehteller (300) umfasst, über dessen Umfang verteilt die Prüfgewichte (100) in gemeinsam mit dem Drehteller (300) rotierbaren Prüfgewichtaufnahmen anordenbar sind und mittels dessen die das jeweils aktuell zu verwiegende Prüfgewicht (100) tragende Prüfgewichtaufnahme in einer Wäge-Bereitschaftsposition über dem Wägegutträger (200) positionierbar ist,
**dadurch gekennzeichnet,**
**dass** jede Prüfgewichtaufnahme als eine relativ zu dem Drehteller (300) vertikalbeweglich an diesem gelagerte Trägergondel (400) ausgebildet ist, die mittels einer ersten motorischen Höhenverstelleinheit (500, 500') relativ zu dem Drehteller (300) höhenverstellbar ist.

2. Waage nach Anspruch 1,
**dadurch gekennzeichnet,**
**dass** jede Trägergondel (400) nach oben gegen einen zugeordneten,
drehtellerfesten Anschlag (340) federvorgespannt und mittels einer von der ersten motorischen Höhenverstelleinheit (500, 500') aufgebrachten Kraft entgegen der Federvorspannkraft motorisch nach unten absenkbar ist.

3. Waage nach einem der vorangehenden Ansprüche,
**dadurch gekennzeichnet,**
**dass** jede Trägergondel (400) mittels einer Parallellenkeranordnung (510), deren festes Ende an dem Drehteller (300) und deren bewegliches Ende an der Trägergondel (400) fixiert ist, an dem Drehteller (300) angelenkt ist.

4. Waage nach einem der vorangehenden Ansprüche,
**dadurch gekennzeichnet,**
**dass** die erste motorische Höhenverstelleinheit (500) mit dem Drehteller (300) mechanisch unverbunden ist und nur auf die jeweils in der Wäge-Bereitschaftsposition befindliche Trägergondel (400) einzuwirken vermag.

5. Waage nach Anspruch 4, soweit rückbezogen auf Anspruch 3,
**dadurch gekennzeichnet,**
**dass** die erste motorische Höhenverstelleinheit (500) einen exzentrischen Nocken (530) aufweist, der auf einer motorisch rotierbaren Nockenwelle (531) fixiert ist, wobei der Nocken (530) derart angeordnet ist, dass sich ein mit der jeweils in der Wäge-Bereitschaftsposition befindlichen Trägergondel (400) vertikalkraftübertragend verbundener Stößel (520) im Bewegungsbereich des Nockens (530) befindet, sodass der Stößel (520) durch Rotation der Nockenwelle (531) mittels des Nockens (530) mechanisch niederdrückbar ist.

6. Waage nach Anspruch 5,
**dadurch gekennzeichnet,**
**dass** die Nockenwelle (531) oberhalb des Drehtellers (300), parallel zu diesem und windschief zu seiner Drehachse verläuft,
die Trägergondeln (400) hängend unterhalb des Drehtellers (300) gelagert sind und ihr jeweiliger Stößel (520) in einen jeweils zugeordneten Durchbruch (350) des Drehtellers (300) hineinragt oder diesen durchragt.

7. Waage nach einem der vorangehenden Ansprüche,
**dadurch gekennzeichnet,**
**dass** der Drehteller (300) auf einer Mehrzahl von, insbesondere auf genau drei, über seinen Umfang verteilten und nach oben auf seine Unterseite einwirkenden Wälzlagern (320) axialgelagert ist.

8. Waage nach einem der vorangehenden Ansprüche,
**dadurch gekennzeichnet,**
**dass** der Drehteller (300) mittels einer Mehrzahl von über seinen Umfang verteilten, nach radial innen auf seine Umfangsfläche einwirkenden Wälzlagern (310; 311, 312) radialgelagert ist.

9. Waage nach Anspruch 8,
**dadurch gekennzeichnet,**
**dass** der Drehteller (300) mittels genau dreier Wälzlager (310), von denen zwei als Festlager (312) und eines als federvorgespanntes Loslager (311) ausgebildet sind, radialgelagert ist.

10. Waage nach einem der vorangehenden Ansprüche,
**dadurch gekennzeichnet,**
**dass** der Drehteller (300) mittels eines auf seiner Oberfläche abrollenden, motorisch antreibbaren Reibrades (330) antreibbar ist.

11. Waage nach Anspruch 10,
**dadurch gekennzeichnet,**
**dass** das Reibrad (330) auf der Oberseite des Drehtellers (300) abrollt und auf einer oberhalb des Drehtellers (300) und senkrecht zu dessen Drehachse (301) angeordneten, motorisch rotierbaren Antriebswelle (331) fixiert ist.

12. Waage nach einem der vorangehenden Ansprüche,
**dadurch gekennzeichnet,**
**dass** ein Tragboden (410) der Trägergondel (400) mit Schlitzen (411) versehen ist, durch welche im abgesenkten Zustand der in ihrer Wäge-Bereitschaftsposition befindlichen Trägergondel korrespondierende Stege (222) des Wägegutträgers (200) hindurchragen.

13. Waage nach einem der vorangehenden Ansprüche,
**dadurch gekennzeichnet,**
**dass** in Bezug auf die Drehachse (301) des Drehtellers (300) winkelversetzt zu dem Wägegutträger (200) eine Bestückungseinheit angeordnet ist, mittels welcher das Magazin mit Gewichtsstücken aus einem Gewichtsstücklager als Prüfgewichte (100) bestückbar ist.

14. Waage nach Anspruch 13, soweit rückbezogen auf Anspruch 4,
**dadurch gekennzeichnet,**
**dass** zusätzlich zu der ersten motorischen Höhenverstelleinheit (500, 500') eine gleichartige, zweite motorische Höhenverstelleinheit (600) vorgesehen ist, die nur auf diejenige der Trägergondeln (400) einzuwirken vermag, die sich aktuell in einer Bestückungs-Bereitschaftsposition über einem radial zum Drehteller (300) bewegbaren Zuführelement (700) der Bestückungseinheit befindet.

## Claims

1. Balance, comprising
- a magazine for test weights (100) to be weighed in succession,
- a weighing device with a load carrier (200) for holding a test weight (100) during an associated weighing operation, and
- a load changing device for transferring the test weight (100) currently to be weighed from the magazine to the load carrier (200),
wherein the magazine comprises a motorized rotatable turntable (300), over the circumference of which the test weights (100) can be arranged distributed in test weight receptacles rotatable together with the turntable (300) and by which the test weight receptacle carrying the test weight (100) currently to be weighed can be positioned in a weighing standby position above the load carrier (200),
**characterized in that**
each test weight receptacle is configured as a carrier gondola (400) mounted to the turntable (300) in a manner vertically movable relative to the turntable and is adjustable in height relative to the turntable (300) by a first motorized height adjustment unit (500, 500').

2. Balance according to claim 1,
**characterized in that**
each carrier gondola (400) is spring-biased upwards against an associated stop (340) fixed to the turntable and can be lowered downwards in a motorized manner via a force applied by the first motorized height adjustment unit (500, 500') counter to the spring-biasing force.

3. Balance according to any one of the preceding claims,
**characterized in that**
each carrier gondola (400) is articulated to the turntable (300) through a parallel link arrangement (510), the fixed end of which is fixed to the turntable (300) and the movable end of which is fixed to the carrier gondola (400).

4. Balance according to any one of the preceding claims,
**characterized in that**
the first motorized height adjustment unit (500) is mechanically unconnected to the turntable (300) and is only able to act on the carrier gondola (400) located in the weighing standby position.

5. Balance according to claim 4, insofar as it refers back to claim 3,
**characterized in that**
the first motorized height adjustment unit (500) has an eccentric cam (530) which is fixed on a motor-driven rotatable camshaft (531), the cam (530) being arranged such that a plunger (520) connected in a vertically force-transmitting manner to the carrier gondola (400) located in the weighing standby position is located in the range of movement of the cam (530), so that the plunger (520) can be mechanically depressed by the cam (530) through rotation of the camshaft (531).

6. Balance according to claim 5,
**characterized in that**
the camshaft (531) runs above the turntable (300), in parallel thereto and offset to an axis of rotation of the turntable,
the carrier gondolas (400) are suspended below the turntable (300) and the respective plunger (520) projects into or through a respective associated aperture (350) of the turntable (300).

7. Balance according to any one of the preceding claims,
**characterized in that**
the turntable (300) is axially supported on a plurality of, in particular exactly three, roller bearings (320) distributed over the circumference and acting upwards onto an underside of the turntable.

8. Balance according to any one of the preceding claims,
**characterized in that**
the turntable (300) is radially supported by a plurality of roller bearings (310; 311, 312) distributed over the circumference and acting radially inwards onto a circumferential surface of the turntable.

9. Balance according to claim 8,
**characterized in that**
the turntable (300) is radially supported by exactly three roller bearings (310), two of which are configured as fixed bearings (312) and one of which is configured as a spring-biased floating bearing (311).

10. Balance according to any one of the preceding claims,
**characterized in that**
the turntable (300) can be driven by a motor-driven friction wheel (330) rolling on a surface of the turntable.

11. Balance according to claim 10,
**characterized in that**
the friction wheel (330) rolls on the upper side of the turntable (300) and is fixed on a motorized rotatable drive shaft (331) arranged above the turntable (300) and perpendicular to an axis of rotation (301) of the turntable.

12. Balance according to any one of the preceding claims,
**characterized in that**
a platform (410) of the carrier gondola (400) is provided with slots (411), through which, in the lowered state of the carrier gondola in the weighing standby position, corresponding webs (222) of the load carrier (200) project.

13. Balance according to any one of the preceding claims,
**characterized in that**
a loading unit is arranged at an angle offset to the load carrier (200) with respect to the axis of rotation (301) of the turntable (300), with which loading unit the magazine can be loaded with weights from a weights store as test weights (100).

14. Balance according to claim 13, insofar as it refers back to claim 4,
**characterized in that**
in addition to the first motorized height adjustment unit (500, 500'), a second motorized height adjustment unit (600) of the same type is provided, which is only able to act on the carrier gondola (400) that is currently in a loading standby position above a feed element (700) of the loading unit that can be moved radially relative to the turntable (300).

## Revendications

1. Balance, comprenant
- un magasin pour des poids de contrôle (100) à peser successivement,
- un dispositif de pesée avec un support d'article à peser (200) pour recevoir respectivement un poids de contrôle (100) pendant un processus de pesée associé et
- un système de transfert de charge pour transférer le poids de contrôle (100) respectivement actuellement à peser à partir du magasin sur le support d'article à peser (200),
dans laquelle le magasin comprend un plateau rotatif (300) à rotation motorisée, sur la périphérie duquel les poids de contrôle (100) peuvent être disposés de manière répartie dans des logements de poids de contrôle pouvant tourner conjointement avec le plateau rotatif (300) et au moyen duquel le logement de poids de contrôle portant le poids de contrôle (100) respectivement actuellement à peser peut être positionné sur le support d'article à peser (200) dans une position d'attente de pesée,
**caractérisée en ce que**
chaque logement de poids de contrôle est réalisé sous la forme d'une nacelle de support (400) montée de manière mobile verticalement par rapport au plateau rotatif (300) sur celui-ci, qui est réglable en hauteur par rapport au plateau rotatif (300) au moyen d'une première unité de réglage en hauteur motorisée (500, 500').

2. Balance selon la revendication 1,
**caractérisée en ce que**
chaque nacelle de support (400) est précontrainte par un ressort vers le haut contre une butée (340) associée, fixée au plateau rotatif et peut être abaissée vers le bas de façon motorisée à l'encontre de la force de précontrainte par un ressort au moyen d'une force appliquée par la première unité de réglage en hauteur motorisée (500, 500').

3. Balance selon l'une quelconque des revendications précédentes,
**caractérisée en ce que**
chaque nacelle de support (400) est articulée sur le plateau rotatif (300) au moyen d'un mécanisme à bras parallèles (510), dont l'extrémité fixe est fixée sur le plateau rotatif (300) et dont l'extrémité mobile est fixée sur la nacelle de support (400).

4. Balance selon l'une quelconque des revendications précédentes,
**caractérisée en ce que**
la première unité de réglage en hauteur motorisée (500) n'est pas reliée mécaniquement au plateau rotatif (300) et peut uniquement agir sur la nacelle de support (400) se trouvant respectivement dans la position d'attente de pesée.

5. Balance selon la revendication 4, dans la mesure où elle est rattachée à la revendication 3,
**caractérisée en ce que**
la première unité de réglage en hauteur motorisée (500) présente une came (530) excentrique, qui est fixée sur un arbre à came (531) à rotation motorisée, dans laquelle la came (530) est disposée de telle sorte qu'un poussoir (520) relié de manière à transmettre une force verticale à la nacelle de support (400) se trouvant respectivement dans la position d'attente de pesée se trouve dans la zone de mouvement de la came (530), de sorte que le poussoir (520) peut être abaissé mécaniquement au moyen de la came (530) par rotation de l'arbre à came (531).

6. Balance selon la revendication 5,
**caractérisée en ce que**
l'arbre à came (531) s'étend au-dessus du plateau rotatif (300), parallèlement à celui-ci et de manière penchée par rapport à l'axe de rotation de celui-ci,
les nacelles de support (400) sont montées en suspension au-dessous du plateau rotatif (300) et leur poussoir (520) respectif fait saillie dans un passage (350) respectivement associé du plateau rotatif (300) ou traverse celui-ci.

7. Balance selon l'une quelconque des revendications précédentes,
**caractérisée en ce que**
le plateau rotatif (300) est monté axialement sur une pluralité de, en particulier sur exactement trois, paliers à roulement (320) répartis sur sa périphérie et agissant vers le haut sur sa face inférieure.

8. Balance selon l'une quelconque des revendications précédentes,
**caractérisée en ce que**
le plateau rotatif (300) est monté radialement au moyen d'une pluralité de paliers à roulement (310 ; 311, 312) répartis sur sa périphérie, agissant radialement vers l'intérieur sur sa surface périphérique.

9. Balance selon la revendication 8,
**caractérisée en ce que**
le plateau rotatif (300) est monté radialement au moyen d'exactement trois paliers à roulement (310), dont deux sont réalisés sous la forme d'un palier fixe (312) et un sous la forme d'un palier libre (311) précontraint par un ressort.

10. Balance selon l'une quelconque des revendications précédentes,
**caractérisée en ce que**
le plateau rotatif (300) peut être entraîné au moyen d'une roue à friction (330) roulant sur sa surface, pouvant être entraînée de façon motorisée.

11. Balance selon la revendication 10,
**caractérisée en ce que**
la roue à friction (330) roule sur la face supérieure du plateau rotatif (300) et est fixée sur un arbre d'entraînement (331) à rotation motorisée, disposé au-dessus du plateau rotatif (300) et perpendiculairement à l'axe de rotation (301) de celui-ci.

12. Balance selon l'une quelconque des revendications précédentes,
**caractérisée en ce que**
un fond porteur (410) de la nacelle de support (400) est pourvu de fentes (411) à travers lesquelles passent des nervures (222) correspondantes du support d'article à peser (200) dans l'état abaissé de la nacelle de support se trouvant dans sa position d'attente de pesée.

13. Balance selon l'une quelconque des revendications précédentes,
**caractérisée en ce que**
une unité de garniture, au moyen de laquelle le magasin peut être garni de poids provenant d'un stockage de poids en tant que poids de contrôle (100), est disposée de manière décalée angulairement du support d'article à peser (200) par rapport à l'axe de rotation (301) du plateau rotatif (300).

14. Balance selon la revendication 13, dans la mesure où elle est rattachée à la revendication 4,
**caractérisée en ce que**
en plus de la première unité de réglage en hauteur motorisée (500, 500') une deuxième unité de réglage en hauteur motorisée (600) similaire est prévue, qui peut seulement agir sur celle des nacelles de support (400) qui se trouve actuellement dans une position d'attente de garniture sur un élément d'amenée (700) de l'unité de garniture mobile radialement par rapport au plateau rotatif (300).
